# EUROPÄISCHE PATENTSCHRIFT

(11) **EP 0 912 411 B1**
(45) Veröffentlichungstag und Bekanntmachung des Hinweises auf die Patenterteilung: **17.11.1999**
(21) Anmeldenummer: 97930337.7
(22) Anmeldetag: 14.06.1997
(51) Int. Cl.: B65D 25/32, B29C 45/00

(54) **GELENKVERBINDUNG ZWISCHEN ZWEI EINSTÜCKIG GESPRITZTEN KUNSTSTOFFTEILEN, INSBESONDERE KUNSTSTOFFBEHÄLTER MIT TRAGEBÜGEL, UND VERFAHREN ZU DEREN HERSTELLUNG**
ARTICULATED CONNECTION BETWEEN TWO PLASTIC MEMBERS INJECTION MOULDED TO FORM ONE MEMBER, IN PARTICULAR PLASTIC CONTAINER WITH A CARRIER BOW, AND METHOD FOR THE PRODUCTION THEREOF
ASSEMBLAGE ARTICULE ENTRE DEUX PIECES PLASTIQUES MOULEES PAR INJECTION POUR NE FORMER QU'UNE SEULE PIECE, NOTAMMENT UN RECIPIENT PLASTIQUE A ETRIER PORTEUR ET PROCEDE PERMETTANT DE LE PRODUIRE

(30) Priorität: 18.06.1996 DE 29610691 U
(43) Veröffentlichungstag der Anmeldung: 06.05.1999
(73) Patentinhaber: Jokey Plastik Wipperfürth GmbH, D-51688 Wipperfürth (DE)
(72) Erfinder: GEORGIADIS, Robert, Guido, D-51429 Bergisch Gladbach (DE)
(74) Vertreter: Stachow, E.-W., Prof. Dr.
(86) Internationale Anmeldenummer: DE9701244
(87) Internationale Veröffentlichungsnummer: WO9748612

(56) Entgegenhaltungen:
- DE-A- 3 908 479
- DE-A- 4 327 175
- DE-U- 29 610 691
- GB-A- 2 145 993
- US-A- 4 125 246

## Beschreibung

Die Erfindung betrifft eine Gelenkverbindung zwischen zwei einstückig gespritzten Kunststofftellen, wobei das erste Kunststoffteil einen Zapfen und das zweite Kunststoffteil eine Öse aufweist, beide Kunststoffteile über Anbindungen miteinander verbunden sind und die Anbindungen nach Art von Sollbruchsteller lösbar sind. Insbesondere betrifft die Erfindung einen Kunststoffbehälter mit zwei Gelenkverbindungen der vorstehend genannten Art für einen Tragebügel.

Schließlich betrifft die Erfindung ein Verfahren zur Herstellung einer Gelenkverbindung zwischen zwei einstückig gespritzten Kunststoffteilen, wobei das erste Kunststoffteil einen Zapfen und das zweite Kunststoffteil eine Öse aufweist und Zapfen und Öse über eine umlaufende Nut und einen fit der Nut korrespondierenden Vorsprung miteinander verbunden werden. Das Verfahren bezieht sich insbesondere auf die Herstellung eines Kunststoffbehälters mit Tragebügel, wobei der Tragebügel an beiden Enden Tragebügelösen und der Behälter Zapfen aufweist.

Gelenkverbindungen zwischen zwei einstückig gespritzten Kunststoffteilen, insbesondere Kunststoffbehälter mit Tragebügel, werden meist in Massenproduktion hergestellt. Werden die Kunststoffteile, zum Beispiel der Kunststoffbehälter und der Tragebügel, getrennt gefertigt, erfordert deren Anbringen einen erheblichen Aufwand, da dafür ein zusätzlicher Anbügelvorgang nötig ist, der zusätzliche Anbügelautomaten erfordert. Aus diesem Grunde geht das Bestreben dahin, die gelenkig zu verbindenden Kunststoffteile, Zum Beispiel den Kunststoffbehälter und den Tragebügel, in einem einzigen Arbeitsgang herzustellen.

Gelenkverbindungen zwischen zwei einstückig geformten Verbindungen, insbesondere bei Kunststoffbehältern mit angespritztem Tragebügel, sind aus US-PS 4.125.246 und DE-A 43 27 175 bekannt. Nach dem Spritzguß der Kunststoffteile wird beispielsweise der Tragebügel bei Kunststoffbehältern von den im oberen Bereich des Behälterkörpers angeordneten Zapfen durch Aufbrechen der Anbindungen gelöst. Mit einem solchen einstückigen Herstellungsverfahren ist es möglich, eine Vielzahl von Herstellungsschritten, die bei einer getrennten Herstellung der Kunststoffteile notwendig wären, zu vermeiden.

Bei der Gelenkverbindung von einstückig gefertigten Kunststoffteilen bisheriger Bauart, insbesondere bei einstückig gefertigten Kunststoffbehältern, wird das Herunterrutschen der Öse von dem Zapfen durch ein am freien Ende des Zapfens angeordnetes Sicherungselement verhindert. Ein solches Sicherungselement ist, wie in DE-A 43 27 175, beschrieben beispielsweise ein am Ende des Zapfens angeordneter Vorsprung, der als ein um das Zapfenende laufender ringartiger Vorsprung ausformbar ist. Da bei einstückig gefertigten Kunststoffteilen bisheriger Bauart die über die Anbindungen angespritzten Ösen den Zapfen umschließen, sind die Kunststoffteile bereits nach dem Aufbrechen der Anbindungen mit dem Zapfen bewegbar verbunden.

Nachteilig an der Gelenkverbindung bisher bekannter einstückig geformter Kunststoffteile ist es, daß mit dem Sicherungselement eine vorspringende Kante an dem Zapfen entsteht. An der Kante angreifende Kräfte können zum Abbrechen des Sicherungselements oder des Zapfens führen. Ohne Sicherungselement jedoch ist das Herunterrutschen der Öse vom Zapfen nicht verhinderbar, so daß die Gelenkverbindung eines so beschädigten Zapfens unbrauchbar ist. Zusätzlich besteht die Gefahr, daß der Zapfen oder das Sicherungselement durch an der Kante angreifende Kräfte beschädigt wird und erst bei einer Belastung der Gelenkverbindung bricht. Des weiteren erweist es sich insbesondere bei Kunststoffbehältern als nachteilig, daß durch ein solches Sicherungselement die axiale Länge der Öse durch das Sicherungselement eingeschränkt ist. Mit der somit zwangsläufig schmaler als der vorstehende Zapfen ausfallenden Öse ist die Tragfähigkeit und die Verwindungssteifigkeit des gesamten Tragebügels reduziert.

Aufgabe der Erfindung ist es, bei einstückig geformten Kunststoffteilen eine stabile und belastbare Gelenkverbindung in einem im wesentlichen einzigen Arbeitsgang herzustellen, wobei die Öse des zweiten Kunststoffteils gegen das Herunterrutschen vom Zapfen des ersten Kunststoffteils dauerhaft und zuverlässig sicherbar ist und die Gelenkverbindung insbesondere auch zur Befestigung einen angespritzten Tragebügels an einem Behälter geeignet ist.

Die Aufgabe wird erfindungsgemäß dadurch gelöst, daß bei einer Gelenkverbindung der eingangs genannten Art der Zapfen des ersten Kunststoffteils und die Öse des zweiten Kunststoffteils über eine Nut und einen mit der Nut korrespondierenden Vorsprung durch Aufschieben der Öse auf den Zapfen miteinander verbindbar sind und Zapfen und Öse so über die Anbindungen miteinander verbunden sind, daß die Öse im wesentlichen außenseitig koaxial zu dem Zapfen angeordnet ist.

Die Erfindung eignet sich insbesondere für einen Kunststoffbehälter mit zwei solchen Gelenkvorbindungen, wobei das erste Kunststoffteil ein Behälter und das zweite Kunststoffteil ein Tragebügel ist und der Tragebügel an beiden Enden die Ösen und der Behälter die Zapfen aufweist.

Zweckmäßigerweise sind die umlaufende Nut am Zapfen und der Vorsprung als nach innen gerichteter Vorsprung an der Öse ausgebildet.

Unter Korrespondieren von Vorsprung und umlaufender Nut ist zu verstehen, daß die Öse nach Lösen der Anbindungen unter Aufwendung einer Kraft über den Zapfen schiebbar ist und der Vorsprung in die Nut des Zapfens einschnappt. Der damit verbundene Arbeitsschritt wird im folgenden als Anbügeln der Öse bezeichnet.

Um aufwendige Werkzeuge bei der Herstellung der Gelenkverbindung zu vermeiden, ist die Öse so an den Zapfen angespritzt, daß lediglich einfach geformte Zusatzformelemente notwendig sind. Besonders vorteilhaft ist es, die Tragebügelöse so an den Zapfen zu spritzen, daß sie koaxial zu dem Zapfen und der Vorsprung vor der Nut des Zapfens angeordnet ist. Durch das nachträgliche Aufschieben der Tragebügelöse auf den Zapfen ist die zulässige Toleranz des Spritzgusses größer. Des weiteren ist es für die Handhabung des Werkstücks besonders vorteilhaft, daß das Anbügeln des Tragebügels sowohl in dem Werkzeug als auch nach späteren Arbeitsschritten durchführbar ist.

Befindet sich der nach innen gerichtete Vorsprung der Öse in der Nut, so ist dadurch die Gelenkverbindung hergestellt und die Öse gegen Herunterrutschen vom Zapfen gesichert. Bei einer solchen Gelenkverbindung liegt konstruktionsgemäß der Vorsprung, der das Herunterrutschen der Öse vom Zapfen verhindert, auf der Innenseite der Öse und ist somit gegen von außen angreifende Kräfte und damit verbundene Beschädigungen geschützt.

Des weiteren sind insbesondere bei Kunststoffbehältern der nach innen gerichtete Vorsprung der Öse und die umlaufende Nut so anordbar, daß die Öse an der Außenwand des Behälterkörpers möglichst nahe liegt, um somit Angriffskanten zwischen Tragebügelöse und Behälter zu vermeiden, die bei daran angreifenden Kräften zur Beschädigung oder zum Abreißen des Tragebügels führen könnten.

Zweckmäßigerweise ist die umlaufende Nut durch einen radial nach außen gerichteten Vorsprung des Zapfens und die Außenwand des Behälters gebildet.

Weiterhin ist der radiale Vorsprung des Zapfens bevorzugt konusförmig, so daß der Widerstand beim Aufschieben der Tragebügelöse nur langsam zunimmt und somit Zapfen und Tragebügelöse sich elastisch verformen können.

Der Zapfen kann in bekannter Art als Hohlzapfen ausgebildet sein und mindestens einen in Längsrichtung verlaufenden Schlitz aufweisen. Der geschlitzte Hohlzapfen ist durch die beim Anbügeln über den nach innen gerichteten Vorsprung der Tragebügelöse auf den Zapfen aufgebrachte Kraft leichter verkleinerbar. Der mit einem Schlitz versehene Hohlzapfen besitzt nach dem Anbügeln, wenn der den Durchmesser der Tragebügelöse verengende stufenförmige Absatz in die Nut geschnappt ist, wieder annähernd den ursprünglichen Durchmesser. Vorteilhaft an einem geschlitzten Hohlzapfen ist des weiteren, daß die zum Anbügeln des Tragebügels notwendige Kraft geringer ist und somit auch mögliche Beschädigungen des den Durchmesser der Tragebügelöse verengenden Absatzes oder des radialen Vorsprungs des Zapfens vermeidbar sind.

In einer bevorzugten Ausführungsform weist der Zapfen mindestens eine in Längsrichtung verlaufende Nase auf und der nach innen gerichtete Vorsprung der Tragebügelöse besitzt ebenso viele den Nasen entsprechende Ausnehmungen. Mit dieser Ausgestaltung ist die Tragebügelöse einfacher und sicherer auf den Zapfen führbar, da die Tragebügelöse während des Aufschiebens nicht verkantbar ist und durch die Ausnehmung in dem nach innen gerichteten Vorsprung leichter elastisch erweiterbar ist. Ebenso wirken die in Längsrichtung verlaufenden Nasen. Der besondere Vorteil dieser Ausgestaltung wird beim Aufklappen des Tragebügels in die Gebrauchslage zwischen dem Vorsprung in der Öse des Tragebügels und der Nase durch eine formschlüssige Verriegelung erreicht. Auf diese Weise wird ein Abspringen des Tragebügels auch bei einer größeren seitlichen Zugbelastung, wie sie beim Herausziehen eines gefüllten Kunststoffbehälters aus einem Regal auftreten kann, verhindert.

In einer Weiterführung der Erfindung sind Haltemittel vorgesehen, die den Tragebügel in einer seitwärts geschwenkten Position halten. Die Halteposition eines seitwärts geschwenkten Tragebügels erweist sich als vorteilhaft, da bei einer sich an das Anbügeln anschließenden Weiterbearbeitung des Kunststoffbehälters, beispielsweise Etikettieren oder Bedrucken, mit einer solchen Halteposition des Tragebügels eine Störung der Weiterbearbeitung ohne zusätzliche Vorkehrungen vermeidbar ist.

Derartige Haltemittel weisen bevorzugt jeweils an Tragebügel und Außenwand angeformte Vorspünge auf, die in der seitwärts geschwenkten Halteposition des Tragebügels durch die Gewichtskraft des Tragebügels gegeneinandergedrückt werden.

In einer weiteren vorteilhaften Ausführungsform der Erfindung übersteigt die axiale Länge der Tragebügelösen mindestens die axiale Länge der Zapfen. Nach dem Anbügeln des Tragebügels ist somit der Zapfen in der Tragebügelöse versenkt. Dies erweist sich als besonders vorteilhaft, da von außen angreifenden Kräften keine Angriffspunkte am Zapfen geboten werden. Weiterhin vorteilhaft an einer über den Zapfen hinausreichenden Tragebügelöse ist, daß beim Transport oder während des Füllens die Tragebügelösen als einheitliche und stabile Auflagefläche verwendbar sind. So sind die Tragebügelösen beispielsweise als Auflagepunkte beim Transport des Kunststoffbehälters durch Schienen besonders vorteilhaft, da sie eine einheitliche Auflagefläche ohne Kanten aufweist.

Bevorzugt weist der Konus des Zapfens einen drei- oder vieleckigen Querschnitt auf. Der Vorsprung in der Öse ist mit einem dazu korrespondierenden, ähnlichen Öffnungsquerschnitt versehen. Auf diese Weise wird eine ebenfalls formschlüssige Verriegelung zwischen dem Zapfen und der Tragebügelöse erreicht.

Das Profil des Bügelträgers geht zweckmäßigerweise stetig in das Profil der Tragebügelöse über, so daß die Tragebügelöse stabil mit dem übrigen Tragebügel verbindbar ist. Insbesondere ist es vorteilhaft ein am Tragebügel verwendetes Doppel-T-Profil bis zur Tragebügelöse hin stetig und glatt fortzusetzen. Dabei bietet es sich an, den nach innen gerichteten Vorsprung der Tragebügelöse als einen Teil eines T-Profils, das in den entsprechenden Teil eines Doppel-T-Profils des Tragebügels übergeht, auszuformen. Die dadurch entstehende Belastbarkeit und Verwindungssteifigkeit des Tragebügels ist bei der Handhabung eines gefüllten Kunststoffbehälters vorteilhaft. Auch kann das Brechen des Tragebügels durch eine mit wiederholter Verwindung einhergehende Materialermüdung des Tragebügels vermieden werden. Die Lebensdauer und die Tragfähigkeit des Tragebügels werden somit erhöht.

Die das Herstellungsverfahren betreffende Aufgabe wird dadurch gelöst, daß bei einem Verfahren der eingangs genannten Art das erste und zweite Kunststoffteil in einem Spritzgießwerkzeug mit Formhohlräumen für die beiden Kunststoffteile gleichzeitig gegossen werden, wobei der Formhohlraum für die Öse im wesentlichen außenseitig koaxial zum Formhohlraum für den Zapfen angeordnet wird, und nach dem Abkühlen des Kunststoffmaterials und zumindest teilweise Entfernen aus dem Spritzgießwerkzeug, wobei die Öse und der Zapfen in ihrer koaxialen Position gehalten werden, die Öse durch eine axiale Kraft so weit auf den Zapfen aufgeschoben wird, daß der Vorsprung in die Nut eingreift.

Vorzugsweise werden die beiden Kunststoffteile einstückig in einem Spritzgießwerkzeug gegossen, so daß der Zapfen und die Öse über Anbindungen miteinander verbunden sind und die Anbindungen nach Art von Sollbruchstellen lösbar sind. Auf die Öse wird dann eine solche axiale Kraft ausgeübt, daß sich die Anbindung löst.

Insbesondere eignet sich dieses Verfahren zur Herstellung von Kunststoffbehältern, wobei das erste Kunststoffteil ein Behälter und das zweite Kunststoffteil ein Tragebügel ist und der Tragebügel an beiden Enden die Ösen und der Behälter die Zapfen aufweist.

Da die beiden Kunststoffteile in einem Spritzgießwerkzeug mit entsprechenden Formhohlräumen hergestellt werden, werden mehrere Arbeitsgänge vermieden. Die Kunststoffteile können in dem Spritzgießwerkzeug als zwei voneinander getrennte oder durch Anbindungen miteinander verbundene Teile gegossen werden. Die zuletzt genannte Ausführung hat den Vorteil, daß die beiden Kunststoffteile nach dem Spritzgießvorgang und Entfernen aus dem Spritzgießwerkzeug von selbst in einer Position gehalten werden, in der die Öse koaxial zum Zapfen angeordnet ist. In einem darauffolgenden Schritt kann dann die Öse durch eine axiale Kraft auf den Zapfen aufgeschoben werden.

Andererseits kann das Spritzgießwerkzeug jedoch auch so ausgelegt sein, daß getrennt voneinander gegossene Kunststoffteile nach dem Abkühlen des Kunststoffmaterials und zumindest teilweise Entfernen aus dem Spritzgießwerkzeug in ihrer Position, in der die Öse im wesentlichen außenseitig koaxial zum Zapfen angeordnet ist, gehalten werden, wobei die Öse durch eine geeignete Einrichtung auf den Zapfen aufgeschoben wird. Durch dieses integrierte verfahren werden ebenfalls mehrere Arbeitsschritte vermieden.

An einem Ausführungsbeispiel wird die Erfindung nachfolgend beschrieben. In den Zeichnungen zeigt
- **Fig. 1**: einen Querschnitt durch Zapfen und Öse,
- **Fig. 2**: einen Querschnitt durch Zapfen mit angebügelter Öse,
- **Fig. 3**: eine Draufsicht auf Zapfen und Öse,
- **Fig. 4**: eine Draufsicht auf Zapfen und angebügelte Öse und
- **Fig. 5**: eine Seitenansicht von Zapfen und Öse.

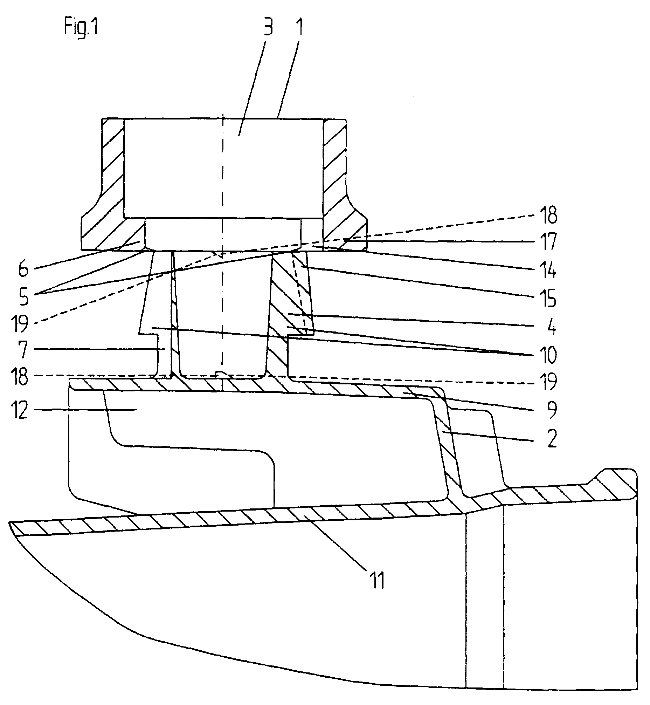

In Figur 1 sind zwei durch eine Gelenkverbindung zu verbindende Kunststoffteile 1, 2 dargestellt. Das erste Kunststoffteil 1, das in dem Ausführungsbeispiel der Ausschnitt eines in der

Figur nicht dargestellten Tragebügels ist, weist eine Öse 3 auf. Das zweite Kunststoffteil 2, das als ein Ausschnitt eines in den Figuren nicht vollständig dargestellten Randes eines Kunststoffbehälters eingezeichnet ist, weist einen aus dem Kunststoffteil 2 hervorstehenden Zapfen 4 auf.

Durch die Anbindungen 5 sind die beiden Kunststoffteile 1, 2 lösbar miteinander verbunden. In Figur 1 sind die Anbindungen zwischen der Öse 3 und dem Zapfen 4 dargestellt. Da die Anbindungen 5 relativ dünn sind, beispielsweise können sie filmartig oder als Stege ausgeformt sein, lösen sie sich direkt unter Krafteinwirkung.

In den Figuren 1, 2, 3 und 4 wird durch die mit Strich-Punkten eingezeichnete Linie die axiale Richtung des Zapfens 4 und der Öse 3 angezeigt. Die Mittelachsen des Zapfens 4 und der Öse 3 stimmen hierbei vorteilhafterweise überein. Ein nach innen gerichteter Vorsprung 6 der Öse 3 ist außenseitig koaxial zu dem Zapfen 4 angeordnet. Der Vorsprung 6 in der Öse ist dabei vor der Nut 7 des Zapfens angeordnet.

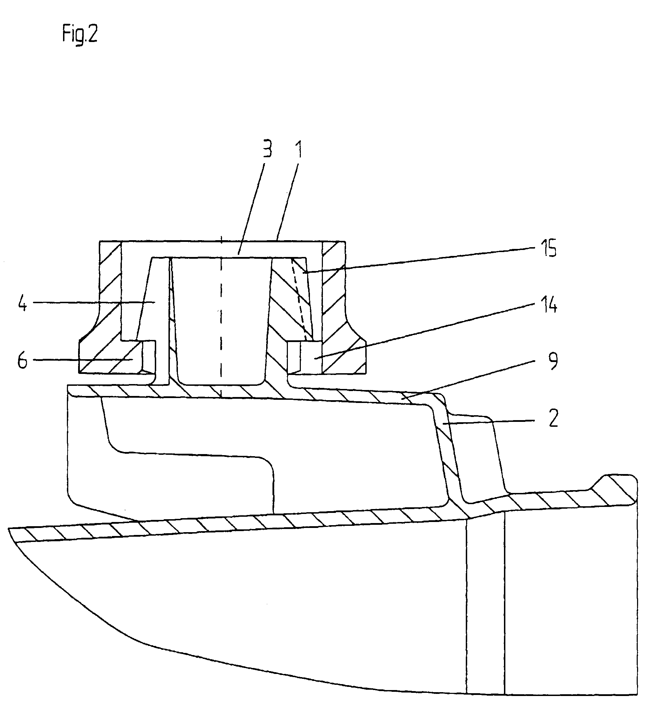

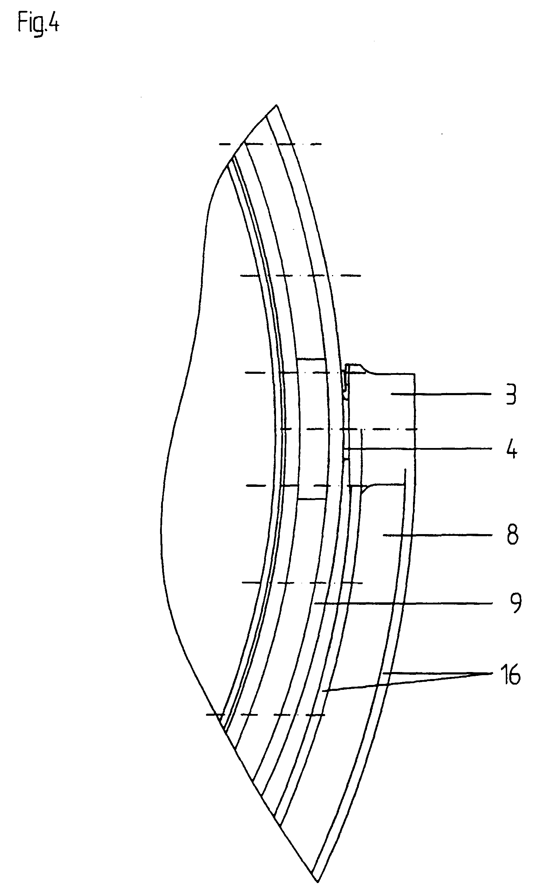

In Figur 2 und 4 ist die über den Zapfen geschobene Öse wiedergegeben. Hierbei sind die Anbindungen 5 der beiden Kunststoffteile gelöst und der Vorsprung 6 ist in die Nut 7 eingeschnappt. Diese über den Zapfen 4 geschobene Öse 3 wird im folgenden als angebügelte Öse bezeichnet. Die Öse 3 wird zum Anbügeln in koaxialer Richtung unter Aufwendung einer Kraft über den Zapfen 4 geschoben. An der eingeschnappten Öse 3 in Figur 2 wird deutlich, daß die Öse 3 gegen Herunterrutschen vom Zapfen 4 gesichert ist und daß der Vorsprung 6 gegen von außen angreifende Kräfte geschützt ist.

In Figur 2 und 4 sind der Tragebügel 8 und die Außenwand 9 des Kunststoffbehälters ausschnittsweise dargestellt. In dem Ausführungsbeispiel ist der Tragebügel außerhalb des Kunststoffbehälters befestigbar.

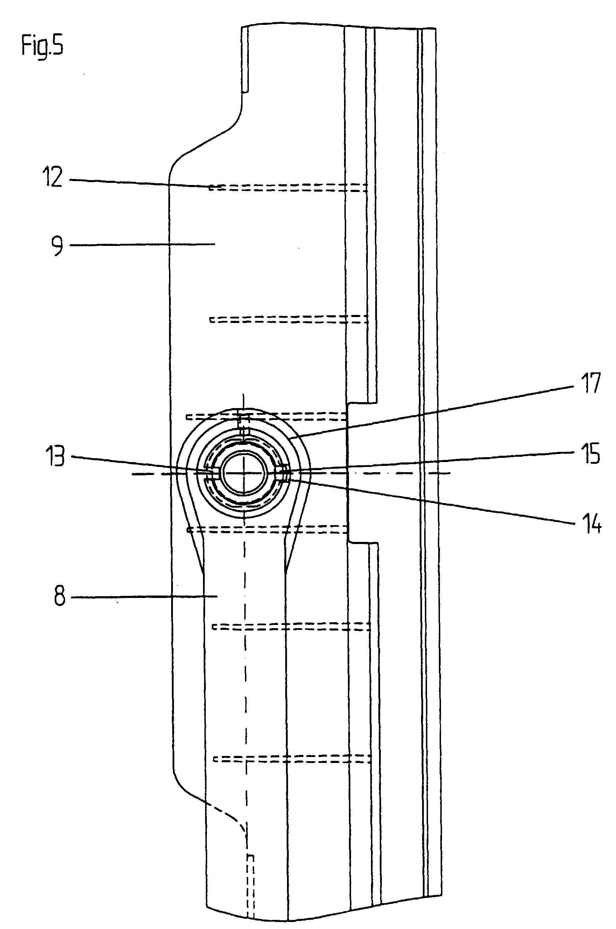

Die umlaufende Nut 7 des Zapfens 4 wird in dem gezeigten Ausführungsbeispiel durch die Außenwand 9 und den Vorsprung 10 gebildet. Die Außenwand 9, an der der Tragebügel 8 anliegt, ist in dem Ausführungsbeispiel als ein Rand 11 eines Doppelrandeimers ausgeformt, der über Verbindungen 12, so wie in Figur 1 und 5 dargestellt, gegen den Behälter abstützbar ist.

Der Vorsprung 10 ist als ein sich zum Zapfenende hin verjüngender Konus mit allgemein rundem Querschnitt ausgebildet. Die Abmessungen des Konus sind dabei so gewählt, daß die Öse 3 mit dem Vorsprung 6 über den konischen Vorsprung 10 des Zapfens 4 schiebbar ist. Der Konus kann jedoch auch mit einem dreieckigen oder vieleckigen Querschnitt versehen werden, wobei dann der Vorsprung 6 in der Öse einen sinngemäß identischen Öffnungsquerschnitt aufweisen muß, um den Tragebügel einrasten zu können. Jede auch noch so geringfügige Auslenkung des Tragebügels führt dann zu einer formschlüssigen Verriegelung desselben.

Der in den Figuren 1, 2 und 5 dargestellte Zapfen 4 ist ein Hohlzapfen. In der Seitenansicht in Figur 5 ist ein Schlitz 13 des Hohlzapfens sichtbar. Durch den Schlitz 13 ist der Durchmesser des Zapfens 4 beim Aufschieben der Öse 3 leichter verkleinerbar.

Die Ausnehmung 14 in dem Vorsprung 6 liegt bei der in Figur 5 dargestellten Position der Öse gegenüber von dem Schlitz 13. Ebenfalls weist der Hohlzapfen eine vorstehende Nase 15 auf, die wie in Figur 5 dargestellt, innerhalb der Ausnehmung 14 liegt. Die Ausnehmung 14 bewirkt zusätzlich, daß der Durchmesser der Öse 3 beim Aufschieben leichter erweiterbar ist. Beim Aufschieben der Öse 3 auf den Zapfen 4 ist es deshalb vorteilhaft, wenn die Nase 15 nach dem Durchtrennen der Anbindungen 5 in die Ausnehmung 14 hineinragt.

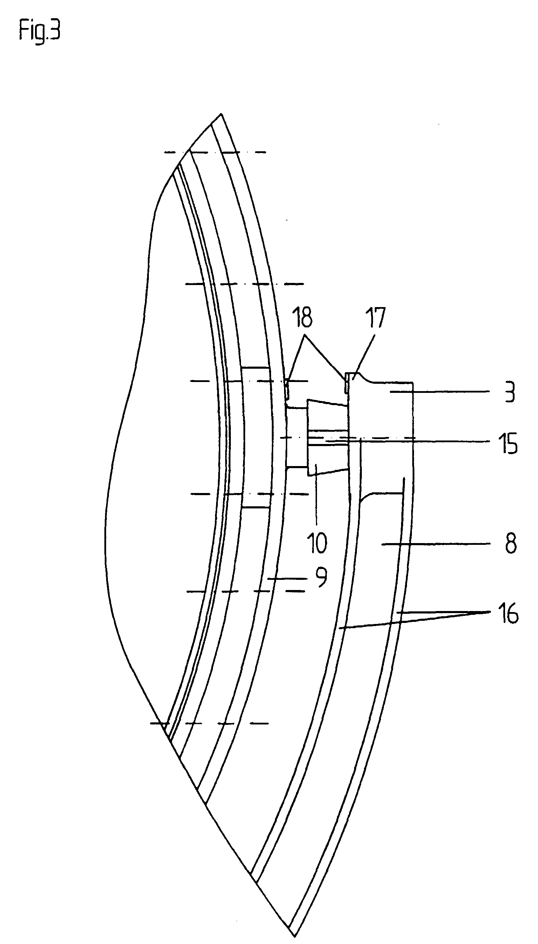

Wie aus den Figuren 1 und 3 hervorgeht, sind an der Öse 3 und an der Außenwand 9 des Behälters Vorsprünge 18 ausgebildet, die nach dem Anbügeln bei einer seitwärts geschwenkten Position des Tragebügels 8 mit senkrechten Seitenflächen aneinanderliegen und ein weiteres Herunterfallen des Tragebügels verhindern. Durch die den senkrechten Seitenflächen gegenüberliegenden schrägen Seitenflächen 19 gleiten die Vorsprünge 18 beim Anheben des Tragebügels aus der nach unten geschwenkten Position ohne Arretierung übereinander.

Die axiale Länge der Öse 3 ist größer als die axiale Länge des Zapfens 4. In Figur 2 wird dargestellt, daß der Zapfen 4 bei aufgebügelter Öse 3 vollständig innerhalb der Öse liegt und somit keinerlei Kanten für eine Beschädigung durch von außen angreifende Kräfte bietet. Durch die Anordnung des Vorsprungs 6 innerhalb der Öse 3 und der umlaufenden Nut 7 auf dem Zapfen 4 ist die aufgebügelte Öse 3 nah an der Außenwand 8 anordbar und somit der in Figur 2 und Figur 4 dargestellte Zwischenraum 15 zwischen Außenwand 8 und Öse 3 klein.

In Figuren 4 und 5 ist der Tragebügel 8 mit einem Doppel-T-Profil 16 versehen. Dies Doppel-T-Profil 16 geht stetig und glatt in das T-Profil 17 der Tragebügelöse über. Hierbei ist vorteilhafterweise der nach innen weisende Vorsprung 6 der Öse 3 als ein Teil des T-Profils 17 ausgeformt.

## Patentansprüche

1. Gelenkverbindung zwischen zwei einstückig gespritzten Kunststoffteilen (1, 2), wobei das erste Kunststoffteil (1) einen Zapfen (4) und das zweite Kunststoffteil (2) eine Öse (3) aufweist, beide Kunststoffteile über Anbindungen (5) miteinander verbunden sind und die Anbindungen nach Art von Sollbruchstellen lösbar sind, **dadurch gekennzeichnet**, daß der Zapfen (4) des ersten Kunststoffteils (1) und die Öse (3) des zweiten Kunststoffteils (2) über eine Nut (7) und einen mit der Nut (7) korrespondierenden Vorsprung (6) durch Aufschieben der Öse (3) auf den Zapfen (4) miteinander verbindbar sind und Zapfen (4) und Öse (3) so über die Anbindungen (5) miteinander verbunden sind, daß die Öse (3) im wesentlichen außenseitig koaxial zu dem Zapfen (4) angeordnet ist.

2. Kunststoffbehälter, **gekennzeichnet durch** zwei Gelenkverbindungen nach Anspruch 1, wobei das erste Kunststoffteil ein Behälter und das zweite Kunststoffteil ein Tragebügel ist und dar Tragebügel an beiden Enden die Ösen und der Behälter die Zapfen aufweist.

3. Kunststoffbehälter nach Anspruch 2, **dadurch gekennzeichnet**, daß die Zapfen (4) jeweils mindestens eine sich an ihrer Außenseite in Längsrichtung erstreckende Nase (15) und die nach innen gerichteten Vorsprünge (6) in den Tragebügelösen (3) mindestens ebenso viele den Nasen (15) entsprechende Ausnehmungen (14) aufweisen.

4. Kunststoffbehälter nach Anspruch 2 oder 3, **dadurch gekennzeichnet**, daß an den Tragebügelösen (3) und an der Außenwand (9) des Behälters Vorsprünge (18) ausgebildet sind, die in einer seitwärts geschwenkten Position des Tragebügels (8) durch die Gewichtskraft des Tragebügels gegeneinandergedrückt sind.

5. Kunststoffbehälter nach einem der Ansprüche 2 bis 4, **dadurch gekennzeichnet**, daß die axiale Länge der Tragabügelösen (3) der axialen Länge der Zapfen (4) entspricht oder diese übersteigt.

6. Kunststoffbehälter nach einen der Ansprüche 2 bis 5, **dadurch gekennzeichnet**, daß der Zapfen (4) einen drei- oder vieleckigen Querschnitt aufweist und daß der Vorsprung (6) in der Öse (3) mit einem sinngemäß ähnlichen Öffnungsquerschnitt versehen ist.

7. Verfahren zur Herstellung einer Gelenkverbindung zwischen zwei einstückig gespritzten Kunststoffteilen (1, 2), wobei das erste Kunststoffteil (1) einen Zapfen (4) und das zweite Kunststoffteil (2) eine Öse (3) aufweist, und Zapfen (4) und Öse (3) über eine umlaufende Nut (7) und einen mit der Nut korrespondierenden Vorsprung (6) miteinander verbunden werden, **dadurch gekennzeichnet,** daß das erste und zweite Kunststoffteil (1, 2) in einem Spritzgießwerkzeug mit Formhohlräumen für die beiden Kunststoffteile (1, 2) gleichzeitig gegossen werden, wobei der Formhohlraum für die Öse (3) im wesentlichen außenseitig koaxial zum Formhohlraum für den Zapfen (4) angeordnet wird, und nach dem Abkühlen des Kunststoffmaterials und zumindest teilweise Entfernen aus dem Spritzgießwerkzeug, wobei die Öse (3) und der Zapfen (4) in ihrer koaxialen Position gehalten werden, die Öse (3) durch eine axiale Kraft so weit auf den Zapfen (4) aufgeschoben wird, daß der Vorsprung (6) in die Nut (7) eingreift.

8. Verfahren nach Anspruch 7, wobei die Kunststoffteile (1, 2) einstückig in einem Spritzgießwerkzeug gegossen werden, so daß der Zapfen (4) und die Öse (3) über Anbindungen miteinander verbunden sind und die Anbindungen (5) nach Art von Sollbruchstellen lösbar sind, **dadurch gekennzeichnet**, daß auf die Öse (3) eine solche axiale Kraft ausgeübt wird, daß sich die Anbindung (5) löst.

9. Verfahren nach Anspruch 7 oder 8, wobei das erste Kunststoffteil ein Behälter und das zweite Kunststoffteil ein Tragebügel ist und der Tragebügel an beiden Enden die Ösen und der Behälter die Zapfen aufweist.

## Claims

1. Articulated connection between two plastics members (1, 2) injection moulded to form one member, wherein the first plastics member (1) has a peg (4) and the second plastics member (2) has a ring (3), the two plastics members are joined to one another via gates (5) and the gates can be detached in the manner of weakened points, characterised in that the peg (4) of the first plastics member (1) and the ring (3) of the second plastics member (2) are adapted to be joined to one another, via a slot (7) and a projection (6) corresponding with the slot (7), by pushing the ring (3) onto the peg (4), and that the peg (4) and the ring (3) are joined to one another via the gates (5) in such a way that the ring (3) is substantially externally coaxial with the peg (4).

2. Plastics container, characterised by two articulated connections according to claim 1, wherein the first plastics member is a container and the second plastics member is a bow-shaped carrying member and the bow-shaped carrying member has the rings at both ends and the container has the pegs.

3. Plastics container according to claim 2, characterised in that the pegs (4) in each case incorporate at least one heel (15) which extends longitudinally on the outside thereof, and the inwardly directed projections (6) in the bow-shaped carrying member rings (3) incorporate at least as many recesses (14) as there are heels (15).

4. Plastics container according to claim 2 or 3, characterised in that formed on the bow-shaped carrying member rings (3) and on the external wall (9) of the container are projections (18) which are pressed against one another by the weight of the bow-shaped carrying member (8) when the bow-shaped carrying member is in a laterally swivelled position.

5. Plastics container according to any of claims 2 to 4, characterised in that the axial length of the bow-shaped carrying member rings (3) is the same as or greater than the axial length of the pegs (4).

6. Plastics container according to any of claims 2 to 5, characterised in that the peg (4) has a triangular or polygonal cross-section and that the projection (6) in the ring (3) is provided with an aperture of an analogous nature.

7. Method for producing an articulated connection between two plastics members (1, 2) injection moulded to form one member, wherein the first plastics member (1) has a peg (4) and the second plastics member (2) has a ring (3), and the peg (4) and the ring (3) are joined to one another via an all-round slot (7) and a projection (6) corresponding with the slot,
characterised in that the first and second plastics members (1, 2) are simultaneously cast in an injection moulding tool with mould cavities for the two plastics members (1, 2), the cavity for the ring (3) being substantially externally coaxial with the cavity for the peg (4), and after the plastics material has cooled and has been at least partly removed from the injection mould, all the while keeping the ring (3) and the peg (4) in their coaxial position, the ring (3) is pushed by an axial force far enough onto the peg (4) for the projection (6) to engage in the slot (7).

8. Method according to claim 7, wherein the plastics members (1, 2) are cast in an injection moulding tool to form one member, with the result that the peg (4) and the ring (3) are joined to one another via gates and the gates (5) can be detached in the manner of weakened points, characterised in that an axial force is exerted on the ring (3) such that the gate (5) becomes detached.

9. Method according to claim 7 or 8, wherein the first plastics member is a container and the second plastics member a bow-shaped carrying member, and the bow-shaped carrying member incorporates the rings at both ends and the container the pegs.

## Revendications

1. Assemblage articulé entre deux pièces en matière plastique moulées d'un seul tenant par injection (1, 2), la première pièce (1) comportant un tenon (4) et la deuxième pièce (2) comportant un oeillet (3), les deux pièces en matière plastique étant reliées l'une à l'autre par des liaisons (5), et lesdites liaisons étant détachables à la manière d'emplacements destinés à la rupture, caractérisé dans ce que le tenon (4) de la première pièce (1) et l'oeillet (3) de la deuxième pièce (2) sont susceptibles d'être reliés l'un à l'autre via à une gorge (7) et une saillie (6) correspondant à la gorge (7) en enfilant l'oeillet (3) sur le tenon (4), et en ce que le tenon (4) et l'oeillet (3) sont reliés l'un à l'autre par intermédiaire des liaisons (5) de telle façon que l'oeillet (3) est agencé essentiellement coaxialement au tenon (4) sur le côté extérieur.

2. Réservoir en matière plastique, caractérisé par deux assemblages articulés selon la revendication 1, dans lequel la première pièce en matière plastique est un réservoir, et la deuxième pièce en matière plastique est un étrier de support, et en ce que l'étrier de support présente les oeillets aux deux extrémités, et le réservoir présente les tenons.

3. Réservoir selon la revendication 2, caractérisé en ce que les tenons (4) comportent respectivement au moins un doigt (15) qui s'étend en direction longitudinale sur leur face extérieure, et en ce que les saillies (6) dirigées vers l'intérieur dans les oeillets (3) des étriers de support présentent des évidements (14), au moins en nombre correspondant à celui des doigts (15).

4. Réservoir en matière plastique selon l'une ou l'autre des revendications 2 et 3, caractérisé en ce que sur les oeillets (3) de l'étrier de support, et sur la paroi extérieure (9) du réservoir sont réalisées des projections (18) qui, dans une position de l'étrier le support (8) pivotée latéralement, sont repoussées l'une contre l'autre par la force du poids de l'étrier de support.

5. Réservoir en matière plastique selon l'une des revendications 2 à 4, caractérisé en ce que la longueur axiale des oeillets (3) de l'étrier de support correspond à, ou dépasse la longueur axiale des tenons (4).

6. Réservoir en matière plastique selon l'une des revendications 2 à 5, caractérisé en ce que le tenon (4) présente une section triangulaire ou polygonale, et en ce que la saillie (6) dans I'oeillet (3) présente une section d'ouverture analogue.

7. Procédé pour réaliser un assemblage articulé entre deux pièces en matière plastique moulées d'un seul tenant par injection (1, 2), dans lequel la première pièce (1) présente un tenon (4), et la deuxième pièce (2) présente un oeillet (3), et le tenon (4) et l'oeillet (3) sont reliés l'un à l'autre au moyen d'une gorge périphérique (7) et d'une saillie (6) correspondant à la gorge, caractérisé en ce que la première et la deuxième pièce en matière plastique (1, 2) sont moulées simultanément dans un outil de moulage par injection avec des cavités de moulage pour les deux pièces en matière plastique (1, 2), la cavité de moulage pour l'oeillet (3) étant agencée essentiellement sur le côté extérieur et coaxialement par rapport à la cavité de moulage pour le tenon (4), et en ce qu'après refroidissement de la matière plastique et enlèvement au moins partiel hors de l'outil de moulage, de sorte que le levier (3) et le tenons (4) soient maintenus dans leur position coaxiale, l'oeillet (3) est enfilé par une force axiale sur le tenon (4) aussi loin que la saillie (6) s'engage dans la gorge (7).

8. Procédé selon la revendication 7, dans lequel les pièces en matière plastique (1, 2) sont moulées d'un seul tenant dans un outil de moulage par injection de manière que le tenon (4) et l'oeillet (3) soient reliés l'un à l'autre par des liaisons, et lesdites liaisons (35) sont détachables à la manière d'emplacements destinés à la rupture, caractérisé en ce que l'on exerce sur l'oeillet (3) une force axiale telle que la liaison (5) se détache.

9. Procédé selon l'une ou l'autre des revendications 7 et 8, dans lequel la première pièce en matière plastique est un réservoir, et la deuxième pièce en matière plastique est un étrier de support, et dans lequel l'étrier de support présente les oeillets aux deux extrémités, et le réservoir présente les tenons.
